(19) **Europäisches Patentamt / European Patent Office / Office européen des brevets**

(11) **EP 3 390 743 B1**

(12) **FASCICULE DE BREVET EUROPEEN**

(45) Date de publication et mention
de la délivrance du brevet:
**25.01.2023 Bulletin 2023/04**

(21) Numéro de dépôt: **16825482.9**

(22) Date de dépôt: **12.12.2016**

(51) Classification Internationale des Brevets (IPC):
**E04F 10/08** (2006.01)      **E06B 7/084** (2006.01)
**E06B 9/32** (2006.01)

(52) Classification Coopérative des Brevets (CPC):
**E06B 9/32; E04F 10/10; E06B 7/086**

(86) Numéro de dépôt international:
**PCT/FR2016/053338**

(87) Numéro de publication internationale:
**WO 2017/103409 (22.06.2017 Gazette 2017/25)**

(54) **BÂTIMENT COMPRENANT UN BRISE SOLEIL MOBILE A MOUVEMENT AUTONOME**

GEBÄUDE MIT EINER AUTONOM BEWEGLICHEN MOBILEN SONNENBLENDE

BUILDING COMPRISING AN AUTONOMOUSLY-MOVING MOBILE SUNSHADE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.12.2015   FR 1562268**

(43) Date de publication de la demande:
**24.10.2018   Bulletin 2018/43**

(73) Titulaires:
• **Commissariat à l'Energie Atomique et aux
Energies
Alternatives
75015 Paris (FR)**
• **Delta Concept
38360 Sassenage (FR)**

(72) Inventeurs:
• **QUENARD, Sébastien
38700 Le Sappey En Chartreuse (FR)**
• **CORONEL, Philippe
38530 Barraux (FR)**
• **DELEPIERRE, Gabriel
01800 Meximieux (FR)**
• **PITONE, Gilbert
38320 Eybens (FR)**

(74) Mandataire: **INNOV-GROUP
310, avenue Berthelot
69372 Lyon Cedex 08 (FR)**

(56) Documents cités:
**EP-A2- 0 069 425      US-A- 3 204 690**

EP 3 390 743 B1

## Description

L'invention concerne les brise-soleil, et en particulier les brise-soleil à géométrie variable destinés à adapter leur orientation en fonction du rayonnement solaire.

Un brise-soleil est un élément d'architecture servant de pare-soleil pour un vitrage de bâtiment. Le brise-soleil est notamment utilisé dans la construction de bâtiments en vue de répondre à la norme HQE, pour contrôler l'impact du soleil sur les vitrages. Un brise-soleil permet de protéger un vitrage de l'exposition solaire pour éviter la surchauffe ou l'éblouissement.

Un positionnement judicieux du brise-soleil permet de contrôler les apports solaires selon l'heure de la journée ou selon la saison. L'importance saisonnière sur l'apport solaire joue d'autant plus que le bâtiment est proche du cercle polaire. Les variations de hauteur de soleil par rapport à l'horizon sont alors plus importantes. En été, on cherche généralement à se protéger du rayonnement solaire. En hiver, on cherche à laisser pénétrer le rayonnement solaire jusqu'au fond des pièces du bâtiment pour mieux les éclairer et les chauffer.

Pour optimiser l'utilisation du soleil en fonction des conditions, les solutions de brise soleil les plus prometteuses comportent une géométrie variable. De tels brise-soleil incluent généralement des lames pivotantes. Les axes de rotation des lames sont généralement superposés verticalement dans la plupart des structures proposées. Les lames des brise-soleil sont généralement montées pivotantes sur un châssis. Généralement, l'axe de pivotement de la lame est disposé soit au niveau d'une extrémité transversale de cette lame la plus proche du bâtiment, soit à mi-largeur de cette lame.

Avantageusement, l'orientation des lames des brise-soleil peut être définie en fonction de la puissance de rayonnement reçue sur les brise-soleil. La publication effectuée à l'adresse internet suivante à la date de dépôt http://intelligentskins.serero.com/?page_id=2233 présente un actionneur autonome d'une lame brise-soleil, le mouvement de l'actionneur étant défini par la dilatation thermique d'un liquide en fonction du rayonnement solaire. Un tel brise-soleil permet donc d'adapter l'orientation des lames en fonction de la puissance de rayonnement solaire, sans nécessiter d'apport extérieur d'énergie pour alimenter un circuit de commande et un moteur électrique d'entraînement.

Un tel dispositif présente cependant des inconvénients. En effet, un tel dispositif nécessite un réservoir et des canalisations pour le liquide à l'intérieur des lames, ce qui impacte les dimensions et la fiabilité d'utilisation des lames du brise-soleil et limite les possibilités de conception.

Le document US3204690 décrit un bâtiment muni d'un vitrage disposé sur une façade du bâtiment. Un brise soleil est muni d'une paroi d'obscurcissement placé face au vitrage pour moduler le rayonnement solaire sur ce vitrage. Un actionneur thermique entraîne la paroi d'obscurcissement. L'actionneur thermique est basé sur des bilames thermostatiques déformés en fonction du rayonnement solaire.

L'invention vise à résoudre un ou plusieurs de ces inconvénients. L'invention porte ainsi sur un bâtiment, tel que défini dans la revendication 1 annexée.

L'invention porte également sur les variantes définies dans les revendications dépendantes annexées. L'homme du métier comprendra que chacune des caractéristiques des variantes des revendications dépendantes peut être combinée indépendamment aux caractéristiques ci-dessus, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue de côté schématique d'un bâtiment muni d'un brise-soleil à parois orientables entraînées par un actionneur, selon un exemple de mise en oeuvre de l'invention.
- la figure 2 est une vue en coupe schématique d'une première variante d'actionneur autonome pour la mise en oeuvre de l'invention ;
- la figure 3 illustre une vue en coupe schématique d'un bilame pour un actionneur autonome ;
- la figure 4 est une vue en coupe schématique d'une deuxième variante d'actionneur autonome pour la mise en oeuvre de l'invention ;
- la figure 5 est une vue en coupe schématique d'une troisième variante d'actionneur autonome pour la mise en oeuvre de l'invention, cet actionneur autonome comportant un dispositif de débrayage manuel ;
- les figures 6 et 7 sont des vues en coupe schématiques dans différentes configurations d'une quatrième variante d'actionneur autonome pour la mise en oeuvre de l'invention, cet actionneur autonome comportant un dispositif de débrayage autonome;
- les figures 8 et 9 sont des vues en coupe schématiques dans différentes configurations d'une cinquième variante d'actionneur autonome pour la mise en oeuvre de l'invention.

L'invention propose un bâtiment muni d'un vitrage et d'un brise soleil comportant une paroi d'obscurcissement mobile par rapport au vitrage, l'entrainement de la paroi d'obscurcissement étant effectué par l'intermédiaire d'un actionneur thermique positionné pour recevoir un rayonnement solaire.

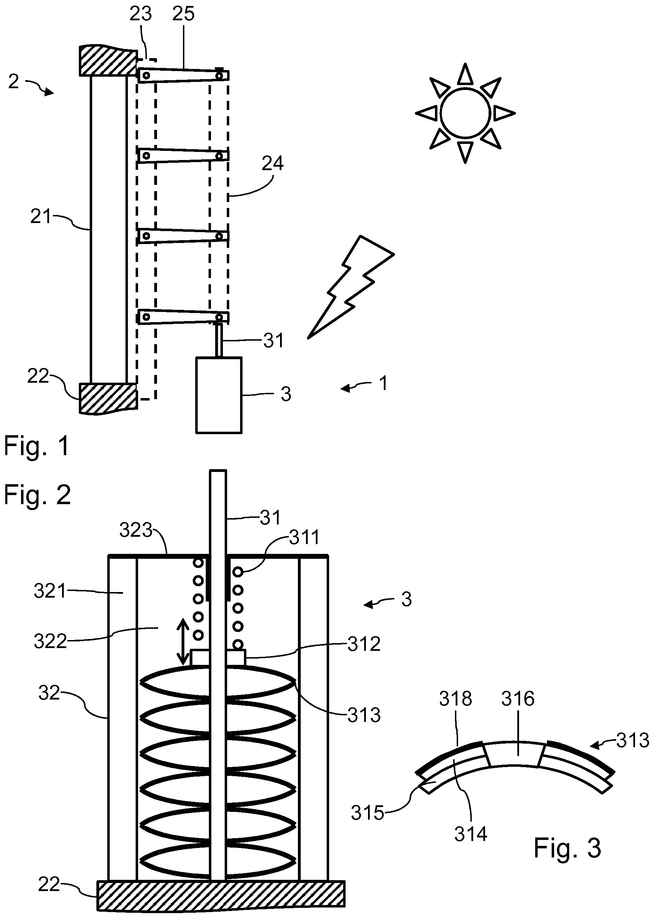

La figure 1 est une vue de côté schématique d'un bâtiment 1 selon un exemple de mode de réalisation, muni d'un brise-soleil 2 à lames ou parois d'obscurcissement orientables 25. La structure du bâtiment 1 est décrite à titre illustratif mais peut bien entendu être mise en oeuvre différemment dans le cadre de l'invention. Le bâtiment 1 comporte un ou plusieurs vitrages 21 transparents à la lumière visible. Les vitrages 21 sont fixés de façon connue en soi à un bâti 22 du bâtiment 1, au niveau de sa façade. Le brise soleil 2 comporte des lames ou parois d'obscurcissement orientables 25, positionnées en vis-à-vis du vitrage 21. Les parois 25 sont opaques ou transmettent moins de la moitié du rayonnement lumineux incident. Les parois 25 sont mobiles par rapport au vitrage 21, elles sont typiquement montées pivotantes autours d'axes horizontaux (ou verticaux). Les parois 25 présentent ici une première extrémité montée pivotante autour d'un axe horizontal parallèle à la vitre. Les premières extrémités des parois 25 sont ici montées pivotantes par rapport à un cadre 23, fixé au bâti 22. Les parois 25 sont ainsi mobiles par rapport au vitrage 21. Les parois 25 comportent ici une deuxième extrémité montée pivotante par rapport à un cadre mobile 24. Dans cet exemple, la sollicitation du cadre mobile 24 permet de déplacer la deuxième extrémité de chaque paroi 25, et ainsi de faire pivoter les parois 25 par rapport au vitrage 21. La position des parois 25 permet ainsi de laisser passer une quantité plus ou moins importante de rayonnement solaire à destination du vitrage 21, et ainsi de moduler le rayonnement solaire atteignant le vitrage 21.

Un actionneur thermique 3 est positionné pour recevoir également le rayonnement solaire. L'actionneur thermique 3 comporte un organe d'entraînement 31. L'organe d'entraînement 31 est ici un piston coulissant selon une direction verticale et sollicite le cadre mobile 24. Les mouvements de l'organe d'entraînement 31 entraînent ainsi les parois d'obscurcissement 25 en rotation par rapport au cadre fixe 23. L'organe d'entraînement 31 est lui-même entraîné par un transducteur thermomécanique détaillé par la suite.

La figure 2 est une vue en coupe schématique d'une première variante d'actionneur thermique 3 pour la mise en oeuvre de l'invention. L'actionneur thermique 3 comporte ici une tige 31 formant un piston coulissant. Le piston 31 est monté coulissant par rapport au bâti 22 du bâtiment 1. Le piston 31 est monté coulissant par rapport à un support 32 fixé au bâti 22. Le support 32 comporte ainsi un couvercle 323 présentant une portée de guidage pour le piston 31. Le guidage en coulissement du piston 31 peut également être mis en oeuvre par l'intermédiaire de bilames thermostatiques 313 détaillés par la suite.

Le support 32 est ici avantageusement configuré pour délimiter une cavité fermée 322 dans laquelle des bilames thermostatiques 313 sont logés. La cavité 322 est ici délimitée par une paroi latérale 321 (par exemple de section circulaire ou rectangulaire) et par le couvercle 323. La paroi latérale 321 présente typiquement une forme cylindrique, avec une génératrice parallèle à la direction de coulissement du piston 31.

L'utilisation d'une telle cavité fermée 322 vise à maximiser le réchauffement des bilames thermostatiques 313 pour une puissance de rayonnement solaire donnée. La cavité fermée 322 permet en effet de créer un effet de serre par forçage radiatif. Un tel effet de serre permet de maximiser le réchauffement des bilames 313 quelle que soit l'orientation du soleil.

Avantageusement, la paroi latérale 321 est transparente pour le rayonnement solaire et laisse typiquement traverser plus de 50 % du rayonnement solaire incident vers la cavité 322. La paroi latérale 321 peut par exemple être réalisée en différents matériaux transparents tels que le verre, le polycarbonate, le méthacrylate, ou le plexiglas.

Avantageusement, la face interne ou externe de la paroi latérale 321 comporte un revêtement réfléchissant, destiné à réfléchir le rayonnement lumineux incident de l'intérieur de la cavité 322, mais destiné à laisser traverser le rayonnement lumineux provenant de l'extérieur, afin de maximiser l'énergie thermique pouvant être transférée aux bilames 313.

Avantageusement, une face externe ou une face interne de la paroi latérale 321 comporte un revêtement absorbant le rayonnement solaire pour le convertir en énergie thermique.

Pour maximiser l'isolation thermique de la cavité 322 par rapport à la température de l'environnement ambiant, on peut envisager de former une paroi latérale 321 présentant une association de deux ou plus de deux parois isolées transparentes séparées par un gaz ou du vide.

Des propriétés et structures identiques peuvent être utilisées pour des couvercles coopérant avec la paroi latérale 321 pour délimiter une cavité fermée 322.

Avantageusement, la cavité 322 est remplie de gaz (par exemple de l'air ou de l'argon) ou est placée sous vide, afin de limiter les échanges thermiques entre la cavité 322 et l'extérieur.

La cavité 322 peut être hermétique vis-à-vis de l'extérieur, ou au contraire présenter des ouvertures si l'on souhaite au contraire réduire le gradient de température appliqué sur les bilames 313 pour un rayonnement solaire donné.

Les bilames 313 sont déformés en fonction du rayonnement solaire reçu par le support 32. Une variation de température des bilames 313 conduit à une variation de leur encombrement selon la direction de coulissement du piston 31. Les bilames 313 sont configurés pour entraîner le piston 31 en coulissement, par exemple lors d'une augmentation de leur température.

Le piston 31 est ici solidaire d'un anneau de butée 312. Une superposition de bilames 313 présente une extrémité en contact avec l'anneau 312 et une autre extrémité en contact avec un fond du support 32. Ainsi, lors d'une dilatation thermique de l'empilement de bilames 313, l'ensemble formé de l'anneau 312 et du piston 31 est déplacé vers le haut dans la configuration illustrée à la figure 2. Un ressort de rappel 311 est ici comprimé entre le couvercle 323 et l'anneau 312. Ainsi, lors d'une contraction thermique de l'empilement des bilames 313, l'ensemble formé de l'anneau et du piston 31 est déplacé vers le bas dans la configuration illustrée à la figure 2.

L'invention permet ainsi d'obtenir un entraînement des parois d'obscurcissement 25 du brise-soleil 2, dont l'orientation est adaptée de façon autonome en fonction du rayonnement solaire. Un tel brise-soleil 2 permet de se dispenser d'un circuit de commande complexe pour contrôler l'orientation des parois 25, ce qui permet également de se dispenser de l'alimentation électrique d'un tel circuit de commande. Un tel brise-soleil 2 permet également de se dispenser d'une alimentation électrique d'un éventuel actionneur d'entraînement des parois d'obscurcissement. Par ailleurs, un tel brise-soleil 2 permet de se dispenser de réservoir et de canalisations de fluide dans les parois d'obscurcissement, ce qui permet d'accroître la compacité des parois et la fiabilité de leur cinématique.

Dans la configuration illustrée à la figure 2, l'actionneur thermique comprend donc une superposition de bilames 313. Dans la configuration illustrée, les bilames thermostatiques 313 forment chacun une plaque de forme concave à une température de 20° C. Les concavités d'au moins deux bilames 313 superposées présentent des orientations opposées. Ainsi, avec une telle superposition de bilames successifs dont les concavités ont des orientations opposées, on peut démultiplier l'amplitude du coulissement du piston 31 pour un échauffement donné. On peut également envisager de superposer plusieurs bilames 313 successifs avec des concavités ayant de mêmes orientations, afin de démultiplier l'effort appliqué par ces bilames sur l'anneau 312 et le piston 31.

Deux bilames 313 successifs de l'empilement peuvent être fixés ensemble par leur périphérie, ou être simplement plaqués l'un contre l'autre à leur périphérie du fait de l'effort de rappel exercé par le ressort 311.

Les bilames 313 peuvent par exemple présenter une forme (en projection selon la direction de coulissement du piston 31) circulaire, rectangulaire ou carrée.

Les bilames 313 choisis sont avantageusement du type à déformation progressive sur la plage de température de fonctionnement visée, afin de pouvoir réaliser un entraînement progressif des parois d'obscurcissement 25 lors d'une variation du rayonnement solaire.

La figure 3 est une vue en coupe schématique d'un exemple de bilame 313 pouvant être inclus dans un actionneur thermique 3 d'un brise-soleil 2 selon l'invention.

Un bilame comprend usuellement deux couches de métaux différents, souples, soudées ou collées l'un contre l'autre. Ces deux couches de métal sont fréquemment soudées par laminage à froid. Des bilames couramment utilisés incluent de l'invar et du nickel ayant des coefficients de dilatation différents. La dilatation thermique des deux couches étant différente, le bilame se déforme avec les variations de température.

Dans l'exemple illustré, le bilame 313 comporte ainsi une première couche 315 solidaire d'une deuxième couche 314. Le matériau de la première couche 315 présente ici un coefficient de dilatation thermique inférieure à celui de la couche 314. La couche 314, présentant le coefficient de dilatation thermique le plus élevé, comporte avantageusement un revêtement 318 (par exemple sous forme de peinture, de texturation de surface, ou de dépôt) destiné à favoriser l'absorption lumineuse et donc le réchauffement de la couche 314. Des compositions de bilames connues, telle que celle commercialisée sous la référence 108SP par la société IMPHY, peuvent par exemple être utilisées.

Le bilame 313 forme ici une plaque de forme concave à une température de 20°C.

Un alésage traversant 316 est ménagé dans la partie médiane du bilame 313, à travers les couches 314 et 315 et à travers le revêtement 318. L'alésage 316 permet le passage du piston 31 pour permettre son coulissement. Par ailleurs, les bordures des alésages 316 peuvent être utilisées pour assurer un guidage en coulissement du piston 31.

L'actionneur thermique 3 peut présenter le bilan thermique suivant, en supposant les déperditions de chaleur par radiation nulles :

$$P = K \cdot S \cdot \Delta T$$

Avec P la puissance lumineuse reçue, S la surface d'échange thermique, K le coefficient d'échange thermique de l'actionneur thermique 3, et $\Delta T$ l'augmentation de température de l'actionneur thermique 3 pour cette puissance lumineuse.

En supposant que l'on peut modéliser les bilames 313 par un modèle linéaire, on peut définir la relation suivante pour l'actionneur thermique 3 :

$$X = A \cdot \Delta T$$

Avec X le déplacement du piston 31 et A un coefficient de transformation thermomécanique de l'association des bilames 313 (A sera par exemple défini en fonction des dimensions, des matériaux et du nombre de bilames 313).

On peut alors définir la relation suivante :

$$X = A \cdot P / (K \cdot S)$$

La linéarité de l'actionneur thermique 3 est favorisée par la présence d'une cavité 322 fermée et dépend également du choix de matériau pour les bilames 313.

Des simulations ont été effectuées avec différentes configurations d'actionneur thermique 3. Des simulations ont notamment été réalisées avec des bilames de forme circulaire en projection, présentant une concavité à une température de 20°C, formés à partir d'une composition de 108SP, et soumis à une variation de température de 75°C.

Pour un diamètre des bilames de 15 mm, avec un empilement de bilames à concavités opposées avec une hauteur de 60 mm, on obtient une course de coulissement de 7,2 mm avec une raideur de 4,7 N/mm.

Pour un diamètre des bilames de 30 mm, avec un empilement de bilames à concavités opposées avec une hauteur de 100 mm, on obtient une course de coulissement de 10 mm avec une raideur de 27,6 N/mm.

Ainsi, l'homme du métier pourra aisément déterminer le choix des dimensions de bilames 313 pour l'actionneur thermique 3 en fonction de la course de coulissement souhaitée et des efforts à exercer.

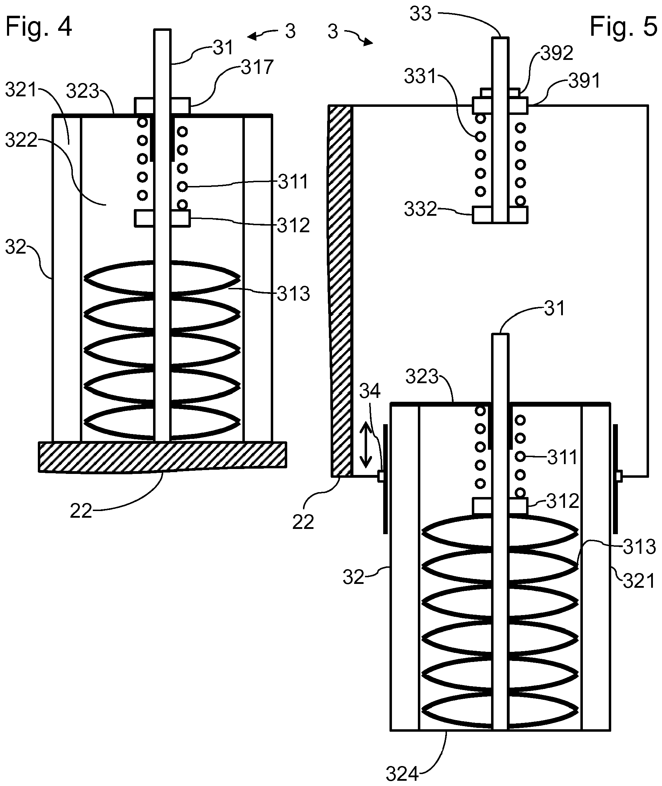

La figure 4 est une vue en coupe schématique d'une deuxième variante d'actionneur thermique 3 pour la mise en oeuvre de l'invention. Cette variante est destinée à adapter un seuil d'échauffement des bilames 313 à partir duquel les bilames 313 entraînent le piston 31 en coulissement. Cette variante est également destinée à modifier la position des parois d'obscurcissement 25 pour une température donnée des bilames 313.

L'actionneur thermique 3 inclut un support 32 présentant la même structure que celui détaillé en référence à la figure 2. Les bilames 313 et le ressort 311 présentent également la même structure que ceux détaillés en référence à la figure 2.

L'anneau de butée 312 présente ici une position réglable le long de l'axe du piston 31. L'anneau 312 est par exemple vissé sur un piston 31 fileté. L'anneau 312 est ici espacé par rapport à l'empilement de bilames 313 lorsque le ressort 311 est à vide. Ainsi, jusqu'à une certaine température des bilames 313, la dilatation de ces bilames 313 n'entraîne pas l'anneau 312 en coulissement.

Une bague filetée 317 peut également être vissée sur le piston 31. La position de la bague filetée 317 par rapport au piston 31 permet par exemple de définir une précontrainte du ressort 311, une position des parois d'obscurcissement 325 en fonction d'une température donnée des bilames 313, et la position de la bague 312 par rapport à l'empilement des bilames 313.

La figure 5 est une vue en coupe schématique d'une troisième variante d'actionneur thermique 3 pour la mise en oeuvre de l'invention. L'actionneur thermique 3 est ici muni d'un embrayage 34 pour sélectivement désolidariser le piston 31 par rapport aux bilames 313. Dans l'exemple de la figure 5, l'embrayage 34 est un embrayage à commande manuelle.

L'actionneur thermique 3 reprend la structure de l'actionneur 3 décrit en référence à la figure 2, le piston 31, le ressort 311 et l'anneau 312 étant remplacés respectivement par le piston 33, le ressort 331 et l'anneau 332. Le support 32 comporte ici un fond 324 fixé à une extrémité inférieure de la paroi latérale 321. L'embrayage 34 permet sélectivement d'immobiliser ou de libérer un coulissement du support 32 par rapport au bâti 22.

L'actionneur thermique 3 comporte une portée 391 fixée au bâti 22. Un piston 31 est monté coulissant par rapport à la portée 391. Un anneau de butée 312 est fixé à une extrémité inférieure du piston 31, par exemple par vissage sur une surface filetée du piston 31. Un autre anneau de butée 392 est fixé au piston 31, de sorte que la portée 391 est positionnée entre les anneaux de butée 312 et 392. Un ressort 311 est positionné entre la portée 391 et l'anneau de butée 312, de façon à pouvoir être comprimé et exercer un effort de rappel sur l'anneau de butée 312. Le piston 31 et le piston 33 sont coaxiaux et sont montés coulissants selon une même direction de coulissement.

Dans la position illustrée à la figure 5, l'embrayage 34 est débrayé de façon à écarter l'extrémité haute du piston 33 de l'extrémité inférieure du piston 31. Ainsi, même si la dilatation des bilames 313 déplace le piston 33 vers le piston 31, le piston 31 reste non sollicité par le piston 33. L'embrayage 34 permet ainsi d'assurer une fonction de sécurité du brise-soleil 2, par exemple en présence d'un ensoleillement excessif ou en cas d'interventions de maintenance sur le brise-soleil 2, nécessitant son immobilisation.

Pour rétablir l'entraînement des parois d'obscurcissement 25 par l'actionneur thermique 3, l'utilisateur déplace le support 32 jusqu'à amener le piston 33 en contact avec le piston 31. L'utilisateur peut alors verrouiller l'embrayage 34, de sorte que les bilames 313 entraînent le piston 33 en coulissement, qui entraîne lui-même le piston 31 en coulissement.

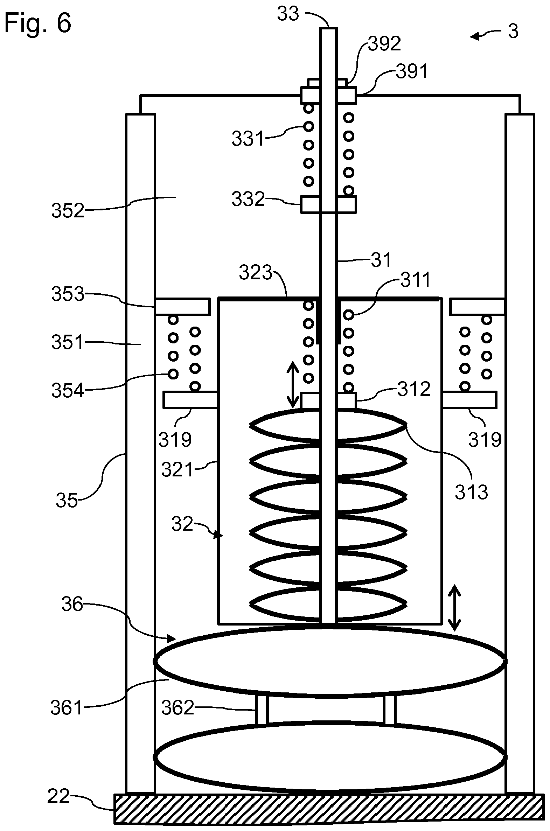

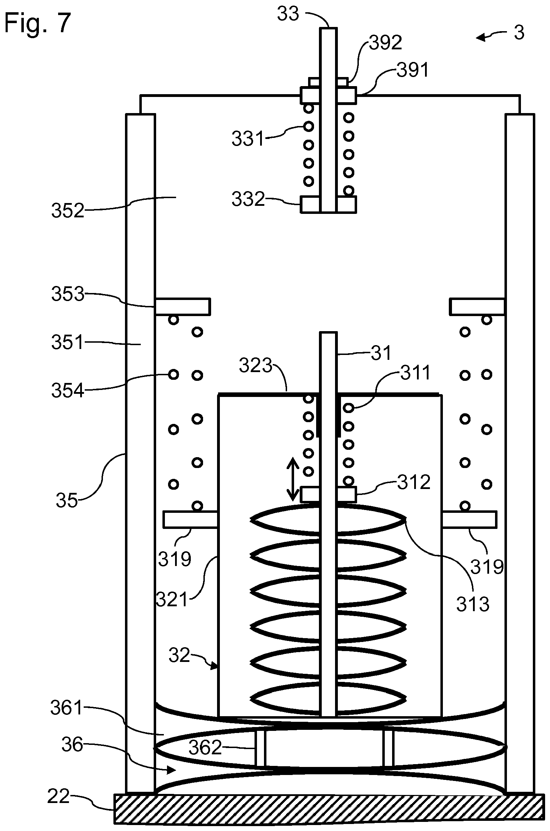

Les figures 6 et 7 sont des vues en coupe schématique d'une quatrième variante d'actionneur thermique 3, dans deux positions différentes de fonctionnement. L'actionneur thermique 3 est ici muni d'un embrayage 36 autonome pour sélectivement désolidariser le piston 31 par rapport aux bilames 313. L'actionneur thermique 3 reprend le support 32, le piston 33, le ressort 331, l'anneau 332 et les bilames 313 décrits en référence à la figure 5. L'actionneur thermique 3 reprend également le piston 31, l'anneau 312, l'anneau 392, le ressort 311 et la portée 391 décrits en référence à la figure 5. La portée 391 est fixée à un support 35. Le support 35 est lui-même fixé au bâti 22. Le support 35 comporte une paroi latérale 351. La paroi latérale 351 délimite une cavité fermée 352. Le support 32 est logé dans la cavité 352 du support 35.

L'embrayage 36 est positionné entre le fond du support 35 et le fond du support 32. L'embrayage 36 comporte plusieurs bilames 361 superposés. Dans la configuration illustrée, les bilames 361 forment chacun une plaque de forme concave à une température de 20° C. Les concavités d'au moins deux bilames 361 superposés présentent des orientations opposées. Deux couples de bilames 361 sont séparés par des entretoises 362. Les bilames 361 sont à retournement brusque dit également de type cloquant. Ainsi, à un seuil donné de température donné dans la plage d'utilisation de l'actionneur thermique 3 (plage d'utilisation par exemple comprise entre -20° et 100°C dans la cavité 322), les bilames 361 subissent une inversion de courbure, de sorte que la concavité de chaque bilame 361 s'inverse. La composition de bilames 361 cloquants est connue en soi de l'homme du métier.

Comme dans l'exemple de la figure 6, le piston 31 et le piston 33 sont coaxiaux et sont montés coulissants selon une même direction de coulissement. Un épaulement périphérique 319 est fixé à l'extérieur du support 32, sur la paroi latérale 321. Un épaulement périphérique 353 est fixé à l'intérieur du support 35, sur la paroi latérale 351. Des ressorts de rappel 354 sont ici comprimés entre les épaulements 353 et 319. Ainsi, lors du débrayage de l'embrayage 36, les ressorts 354 repoussent le support 32 vers le fond du support 35, de façon à écarter le piston 33 du piston 31.

Dans la configuration de la figure 6, les bilames 361 sont à une température inférieure à la température de cloquage. L'épaisseur de l'empilement des bilames 361 et des entretoises 362 maintient le piston 33 en contact avec le piston 31. Cette position correspond ainsi à une position embrayée de l'embrayage 36. Les variations de dilatation dans l'empilement de bilames 313 induisent ainsi un coulissement du piston 31.

Dans la configuration de la figure 7, les bilames 361 sont à une température supérieure à la température de cloquage. Les bilames 361 ont ainsi subi un cloquage avec inversion de leurs concavités. L'épaisseur de l'empilement des bilames 361 et des entretoises 362 sous le support 32 est ainsi réduite. Le ressort de rappel 354 repousse alors le support 32 vers le fond du support 35, de sorte que le piston 33 est écarté du piston 31. Cette position correspond ainsi à une position débrayée de l'embrayage 36. Les variations de dilatation dans l'empilement de bilames 313 n'induisent ainsi aucun coulissement du piston 31.

Ainsi, avec une telle superposition de bilames 361 successifs dont les concavités ont des orientations opposées, on peut générer une course de rappel du support 32 vers le fond du support 35 supérieure à la course du piston 33 par l'entraînement des bilames 313. Par conséquent, après débrayage de l'embrayage 36 par cloquage des bilames 361 (correspondant à la position illustrée à la figure 6) la dilatation des bilames 313 n'induit pas l'entraînement du piston 31 par le piston 33.

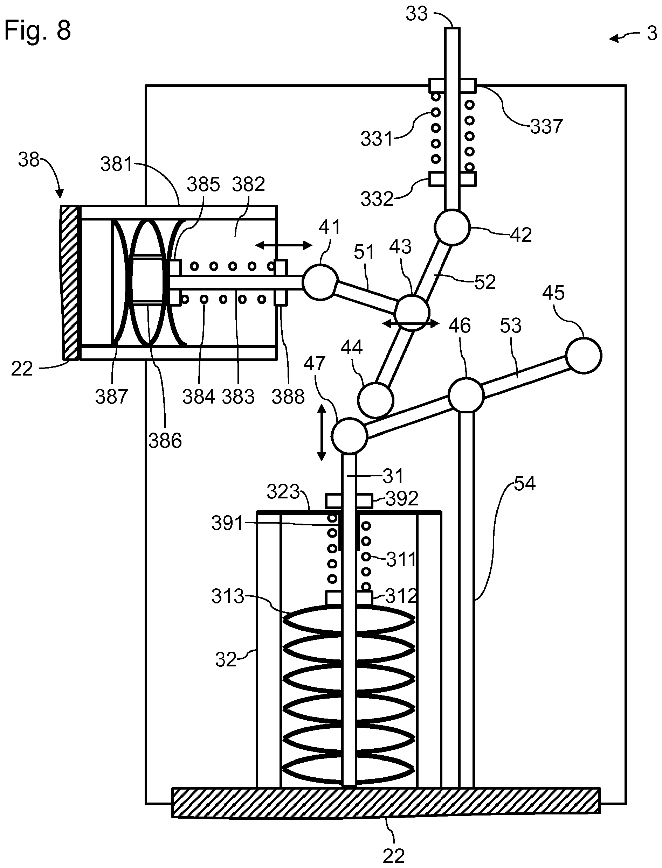

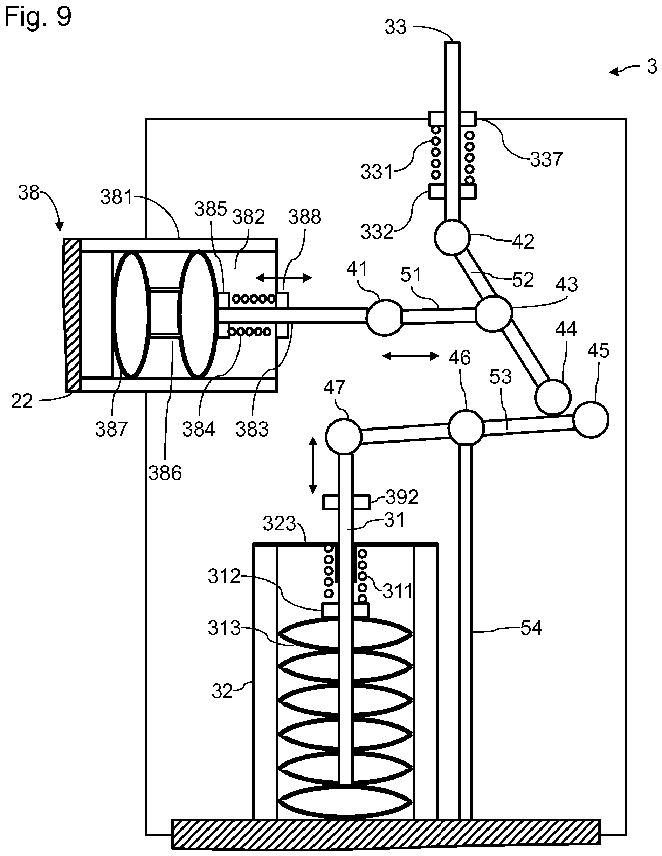

Les figures 8 et 9 sont des vues en coupe schématiques d'une cinquième variante d'actionneur thermique 3 pour la mise en oeuvre de l'invention. L'actionneur thermique 3 illustré vise ici à inverser le sens d'entraînement du piston 33 lors d'une dilatation des bilames 313, de façon autonome et pour un seuil de température donné.

L'actionneur thermique 3 reprend la structure de l'actionneur 3 décrit en référence à la figure 2, le piston 31, le ressort 311 et l'anneau 312 étant remplacés respectivement par le piston 33, le ressort 331 et l'anneau 332.

L'actionneur thermique 3 comporte une portée 391 fixée au bâti 22. Un piston 31 est monté coulissant par rapport à la portée 391. Un anneau de butée 312 est fixé à une extrémité inférieure du piston 31. Un autre anneau de butée 392 est fixé au piston 31, de sorte que la portée 391 est positionnée entre les anneaux de butée 312 et 392. Un ressort 311 est positionné entre la portée 391 et l'anneau de butée 312, de façon à pouvoir être comprimé. Le piston 31 et le piston 33 sont montés coulissants selon une même direction de coulissement.

L'actionneur thermique 3 comprend un actionneur thermique secondaire 38. L'actionneur thermique secondaire 38 forme un commutateur du sens de coulissement du piston 33 pour une dilatation ou une contraction donnée.

L'actionneur thermique secondaire 38 comporte une tige 383 formant un piston coulissant. Le piston 383 est monté coulissant par rapport à une paroi latérale 381, cette paroi 381 étant elle fixée au bâti 22. L'actionneur 38 comporte une butée annulaire 385 fixée à une extrémité interne du piston 383. L'actionneur 38 comporte également un ressort 384 comprimé entre la butée annulaire 385 et une portée 388, guidant le piston 383 en coulissement. Le piston 383 est ici monté coulissant selon une direction sensiblement perpendiculaire à la direction de coulissement du piston 31.

Une cavité fermée 382 est ici délimitée notamment par la paroi latérale 381. Un empilement de bilames à retournement brusque (ou cloquants) 387 est disposé dans la cavité 382. Des entretoises 386 sont disposées entre des paires de bilames 387. L'empilement de bilames cloquants 387 est disposé du côté opposé au ressort 384 par rapport à la buté annulaire 385. L'utilisation de la cavité fermée 382 vise à maximiser le réchauffement des bilames 387 pour un rayonnement solaire donné.

Dans la configuration illustrée, les bilames 387 forment chacun une plaque de forme concave à une température de 20° C. Les concavités d'au moins deux bilames 387 superposées présentent des orientations opposées. La température de cloquage des bilames 387 est par exemple fixée entre entre 60°C et 65°C à l'intérieur de la cavité 382. La plage de fonctionnement peut également être étendue entre environ 50°C et 150°C.

L'actionneur thermique 3 comporte une biellette 51. Cette biellette 51 a une première extrémité montée pivotante par rapport à l'extrémité externe du piston 383, par l'intermédiaire d'une liaison 41. L'axe de pivotement entre la biellette 51 et le piston 383 est perpendiculaire aux directions de coulissement des pistons 33 et 383.

L'actionneur thermique 3 comporte une biellette 52. Cette biellette 52 est montée pivotante par rapport à la deuxième extrémité de la biellette 51, par l'intermédiaire d'une liaison 43. L'axe de pivotement entre les biellettes 51 et 52 est perpendiculaire aux directions de coulissement des pistons 31 et 383. La liaison 43 est positionnée au niveau d'une partie médiane de la biellette 52. La biellette 52 présente une première extrémité montée pivotante par rapport à une extrémité du piston 31 saillante par rapport à la butée annulaire 312, par l'intermédiaire d'une liaison 42. L'axe de pivotement entre la biellette 52 et le piston 31 est perpendiculaire aux directions de coulissement du piston 31 et 383. La biellette 52 présente une deuxième extrémité comprenant un organe de butée 44.

L'actionneur thermique 3 comporte une biellette 53. Cette biellette 53 est montée pivotante par rapport à l'extrémité externe du piston 33, par l'intermédiaire d'une liaison 47. L'axe de pivotement entre la biellette 53 et le piston 33 est perpendiculaire aux directions de coulissement des pistons 31 et 383. La biellette 53 est montée pivotante par rapport à une barre 54 fixée au bâti 22. Une liaison 46 est positionnée au niveau d'une partie médiane de la biellette 53. L'axe de pivotement entre la biellette 53 et la barre 54 est perpendiculaire aux directions de coulissement des pistons 31 et 383. La biellette 53 comporte une butée d'arrêt 45 au niveau de sa deuxième extrémité. La butée d'arrêt 45 est utilisée pour limiter la course de la butée 44. La liaison 47 fait également office de butée de limitation de la course de la butée 44.

Ainsi, lors de l'échauffement des bilames 313 du support 32 en hiver, on souhaitera bénéficier de davantage de rayonnement franchissant le brise-soleil 2, alors que lors d'un échauffement des bilames 313 en été, on souhaitera bénéficier de moins de rayonnement franchissant le brise-soleil 2. La variante illustrée aux figures 8 et 9 permet automatiquement de basculer entre ces modes de fonctionnement en fonction de la température de cloquage des bilames 387 de l'actionneur 38.

À la figure 8, l'actionneur secondaire 38 est en position été (ou haute température), la température sur les bilames 387 étant supérieure au seuil de cloquage de ces bilames 387. Ainsi, le ressort de rappel 384 rappelle la tige 383 vers l'intérieur de la cavité 382. La butée 44 est alors entraînée vers la première extrémité de la biellette 53. La butée 44 est alors positionnée entre la première extrémité de la biellette 53 et la liaison 46. Dans cette position, une dilatation des bilames 313 provoque un pivotement de la biellette 53 qui repousse la butée 44 vers le haut et fait également coulisser le piston 33 vers le haut.

À la figure 9, l'actionneur secondaire 38 est en position hiver (ou basse température), la température sur les bilames 387 étant inférieure au seuil de cloquage de ces bilames 387. L'empilement des bilames 387 et des entretoises 386 repousse alors le ressort de rappel 384. Ainsi, la tige 383 est repoussée vers l'extérieur de la cavité 382. La butée 44 est alors entraînée vers la deuxième extrémité de la biellette 53. La butée 44 est alors positionnée entre la deuxième extrémité de la biellette 53 et la butée 45. Dans cette position, une dilatation des bilames 313 provoque un pivotement de la biellette 53 qui permet au ressort 311 de repousser la butée 44 vers le bas. Le piston 33 coulisse alors également vers le bas.

La cinématique d'inversion du sens du piston 33 est ici donnée à titre d'exemple, et d'autres liaisons cinématiques peuvent bien entendu être envisagées pour obtenir une fonction similaire.

Dans les exemples détaillés précédemment, l'organe d'entraînement 31 est coulissant. Cependant, un organe d'entraînement d'une paroi d'obscurcissement peut également présenter d'autres cinématiques, et peut par exemple être entraîné en rotation par le transducteur thermomécanique. Un bilame de forme spiralée peut par exemple être utilisé dans l'actionneur thermique.

Un brise-soleil 2 tel que décrit peut être positionné en vis-à-vis d'un vitrage 21 à l'intérieur ou à l'extérieur du bâtiment.

Bien que l'invention ait été décrite avec un brise-soleil en association avec un vitrage de bâtiment, on peut envisager de façon indépendante d'utiliser un brise-soleil tel que décrit précédemment pour actionner des lames d'une pergola ou pour former des ombrages décoratifs sur des façades.

**Revendications**

1. Bâtiment (1), comprenant :

    - un vitrage (21) disposé sur une façade du bâtiment ;
    - un brise-soleil (2) comportant au moins une paroi d'obscurcissement (25) positionné en vis-à-vis du vitrage (21) et mobile par rapport au vitrage de façon à moduler le rayonnement solaire atteignant ledit vitrage ;
    - un actionneur thermique (3) positionné pour recevoir ledit rayonnement solaire, et incluant :
    - un transducteur thermomécanique incluant au moins un bilame thermostatique déformé en fonction du rayonnement solaire reçu par l'actionneur thermique ; et
    - un organe d'entraînement (31) de ladite paroi d'obscurcissement, cet organe d'entraînement étant entraîné par ledit transducteur thermomécanique ;

    **Caractérisé en ce que** ledit transducteur thermomécanique comprend plusieurs bilames thermostatiques (313) superposés, dont la déformation induite par une variation de température entraîne ledit organe d'entraînement (31) en coulissement.

2. Bâtiment selon la revendication 1, dans lequel ledit transducteur thermomécanique comprend plusieurs bilames thermostatiques (313) superposés formant chacun une plaque concave à 20°C, les concavités d'au moins deux desdites plaques superposées présentant des orientations opposées.

3. Bâtiment selon l'une quelconque des revendications précédentes, comprenant en outre un embrayage (34) configuré pour sélectivement désolidariser le transducteur thermomécanique dudit organe d'entraînement (31).

4. Bâtiment selon la revendication 3, dans lequel ledit embrayage (36) comprend au moins un bilame thermostatique de sécurité (361), positionné pour être réchauffé par ledit rayonnement solaire et cloquant pour une température supérieure à un seuil, le cloquage dudit bilame de sécurité induisant la désolidarisation entre le transducteur thermomécanique et ledit organe d'entraînement (31).

5. Bâtiment selon la revendication 4, dans lequel ledit seuil est au moins égal à 50°C.

6. Bâtiment selon l'une quelconque des revendications précédentes, dans lequel ledit transducteur thermomécanique est logé dans une cavité fermée (322) absorbant ledit rayonnement solaire.

7. Bâtiment selon l'une quelconque des revendications précédentes, comprenant un organe de rappel (311) sollicitant l'organe d'entrainement (31) avec un effort opposé à l'effort exercé par le transducteur thermomécanique sur cet organe d'entrainement lors d'une dilatation dudit bilame thermostatique (313).

8. Bâtiment selon l'une quelconque des revendications précédentes, comprenant un commutateur d'inversion du sens d'entrainement de l'organe d'entrainement par ledit transducteur thermomécanique lors du rayonnement de ce transducteur thermomécanique, ledit commutateur d'inversion incluant un actionneur thermique secondaire (38) induisant ladite inversion du sens d'entrainement de l'organe d'entrainement (31) lorsque la température dudit actionneur thermique secondaire est au moins égale à un seuil.

9. Bâtiment selon la revendication 8, dans lequel ledit actionneur thermique secondaire (38) comprend au moins un bilame thermostatique (387) d'entrainement d'un piston (383) du commutateur d'inversion, positionné pour être réchauffé par ledit rayonnement solaire et cloquant pour une température supérieure à un seuil.

10. Bâtiment selon la revendication 9, dans lequel ledit piston (383) est solidaire d'une première biellette (52), ladite première biellette étant solidaire dudit organe d'entrainement (31), le transducteur thermomécanique entrainant une deuxième biellette (53) en pivotement, ladite deuxième biellette étant montée pivotante au niveau d'un axe médian délimitant des première et deuxième extrémités de cette deuxième biellette (53), ledit piston (383) entrainant sélectivement une partie de la première biellette (52) de part et d'autre dudit axe médian, de sorte que cette partie de la première biellette soit entrainée soit par la première extrémité de la deuxième biellette, soit par la deuxième extrémité de la deuxième biellette.

**Patentansprüche**

1. Gebäude (1), umfassend:

   - eine Verglasung (21), die an einer Fassade des Gebäudes angeordnet ist;
   - eine Sonnenblende (2), die wenigstens eine Verdunkelungswandung (25) aufweist, die gegenüber der Verglasung (21) positioniert und bezogen auf die Verglasung so beweglich ist, dass sie die Sonnenstrahlung moduliert, die auf die Verglasung trifft;
   - einen thermischen Aktor (3), der so positioniert ist, dass er die Sonnenstrahlung empfängt, und Folgendes enthält:
   - einen thermomechanischen Wandler, der wenigstens ein thermostatisches Bimetall enthält, das in Abhängigkeit von der Sonnenstrahlung verformt wird, die vom thermischen Aktor empfangen wird; und
   - ein Antriebsorgan (31) der Verdunkelungswandung, wobei dieses Antriebsorgan vom thermomechanischen Wandler angetrieben wird;

   **Dadurch gekennzeichnet, dass** der thermomechanische Wandler mehrere übereinander gelagerte thermostatische Bimetalle (313) umfasst, deren Verformung, die durch eine Temperaturänderung hervorgerufen wird, das Antriebsorgan (31) gleitend antreibt.

2. Gebäude nach Anspruch 1, wobei der thermomechanische Wandler mehrere übereinander gelagerte thermostatische Bimetalle (313) umfasst, die bei 20 °C jeweils eine konkave Platte bilden, wobei die Konkavitäten von wenigstens zwei der übereinander gelagerten Platten entgegengesetzte Ausrichtungen aufweisen.

3. Gebäude nach einem der vorhergehenden Ansprüche, ferner umfassend eine Kupplung (34) umfasst, die dazu ausgebildet ist, den thermomechanischen Wandler selektiv vom Antriebsorgan (31) zu lösen.

4. Gebäude nach Anspruch 3, wobei die Kupplung (36) wenigstens ein thermostatisches Sicherheitsbimetall (361) umfasst, das dafür positioniert ist, durch die Sonnenstrahlung erwärmt zu werden, und bei einer Temperatur über einer Schwelle ausbaucht, wobei die Ausbauchung des Sicherheitsbimetalls die Loslösung zwischen dem thermomechanischen Wandler und dem Antriebsorgan (31) hervorruft.

5. Gebäude nach Anspruch 4, wobei die Schwelle wenigstens gleich 50 °C ist.

6. Gebäude nach einem der vorhergehenden Ansprüche, wobei der thermomechanische Wandler in einem geschlossenen Hohlraum (322) untergebracht ist, der die Sonnenstrahlung absorbiert.

7. Gebäude nach einem der vorhergehenden Ansprüche, umfassend ein Rückstellorgan (311), das das Antriebsorgan (31) mit einer Kraft entgegen der Kraft, die vom thermomechanischen Wandler auf dieses Antriebsorgan bei einer Ausdehnung des thermostatischen Bimetalls (313) ausgeübt wird, spannt.

8. Gebäude nach einem der vorhergehenden Ansprüche, umfassend einen Umschalter zur Umkehr der Antriebsrichtung des Antriebsorgans durch den thermomechanischen Wandler bei der Strahlung dieses thermomechanischen Wandlers, wobei der Umkehrungsumschalter einen sekundären thermischen Aktor (38) enthält, der die Umkehr der Antriebsrichtung des Antriebsorgans (31) herbeiführt, wenn die Temperatur des sekundären thermischen Aktors wenigstens gleich einer Schwelle ist.

9. Gebäude nach Anspruch 8, wobei der sekundäre thermische Aktor (38) wenigstens ein thermostatisches Bimetall (387) zum Antreiben eines Kolbens (383) des Umkehrungsumschalter umfasst, das dafür positioniert ist, von der Sonnenstrahlung erwärmt zu werden, und bei einer Temperatur über einer Schwelle ausbaucht.

10. Gebäude nach Anspruch 9, wobei der Kolben (383) mit einem ersten Pleuel (52) fest verbunden ist, wobei das erste Pleuel mit dem Antriebsorgan (31) fest verbunden ist, wobei der thermomechanische Wandler ein zweites Pleuel (53) schwenkend antreibt, wobei das zweite Pleuel an einer Mittelachse schwenkbar gelagert ist, die ein erstes und zweites Ende dieses zweiten Pleuels (53) begrenzt, wobei der Kolben (383) selektiv einen Abschnitt des ersten Pleuels (52) beiderseits der Mittelachse selektiv antreibt, so dass dieser Abschnitt des ersten Pleuels entweder vom ersten Ende des zweiten Pleuels oder vom zweiten Ende des zweiten Pleuels angetrieben wird.

**Claims**

1. Building (1), comprising:

   - a glazing unit (21) disposed on a façade of the building;
   - a sunshade (2) comprising at least one dimming wall (25) positioned facing the glazing unit (21) and that is movable with respect to the glazing unit so as to modulate the solar radiation reaching said glazing unit;
   - a thermal actuator (3) positioned to receive said solar radiation, and including:
   - a thermomechanical transducer including at least one thermostatic bimetallic strip deformed as a function of the solar radiation received by the thermal actuator; and
   - a driving member (31) of said dimming wall, this driving member being driven by said thermomechanical transducer;

**characterized in that** said thermomechanical transducer comprises several superposed thermostatic bimetallic strips (313), the deformation of which induced by a temperature variation slidingly drives said driving member (31).

2. Building according to Claim 1, wherein said thermomechanical transducer comprises several superposed thermostatic bimetallic strips (313) each forming a concave plate at 20°C, the concavities of at least two of said superposed plates having opposite orientations.

3. Building according to either one of the preceding claims, further comprising a clutch (34) configured to selectively disengage the thermomechanical transducer from said driving member (31).

4. Building according to Claim 3, wherein said clutch (36) comprises at least one safety thermostatic bimetallic strip (361), positioned to be heated up by said solar radiation and that swells for a temperature greater than a threshold, the swelling of said safety bimetallic strip inducing the disengagement between the thermomechanical transducer and said driving member (31).

5. Building according to Claim 4, wherein said threshold is at least equal to 50°C.

6. Building according to any one of the preceding claims, wherein said thermomechanical transducer is housed in a closed cavity (322) absorbing said solar radiation.

7. Building according to any one of the preceding claims, comprising a return member (311) stressing the driving member (31) with a force opposing the force exerted by the thermomechanical transducer on this driving member upon an expansion of said thermostatic bimetallic strip (313).

8. Building according to any one of the preceding claims, comprising a switch for reversing the direction of driving of the driving member by said thermomechanical transducer upon the radiant exposure of this thermomechanical transducer, said reversing switch including a secondary thermal actuator (38) inducing said reversal of the direction of driving of the driving member (31) when the temperature of said secondary thermal actuator is at least equal to a threshold.

9.  Building according to Claim 8, wherein said secondary thermal actuator (38) comprises at least one thermostatic bimetallic strip (387) driving a piston (383) of the reversing switch, positioned to be heated up by said solar radiation and that swells for a temperature greater than a threshold.

10. Building according to Claim 9, wherein said piston (383) is secured to a first connecting rod (52), said first connecting rod being secured to said driving member (31), the thermomechanical transducer pivotingly driving a second connecting rod (53), said second connecting rod being pivotingly mounted on a median axis delimiting first and second ends of this second connecting rod (53), said piston (383) selectively driving a part of the first connecting rod (52) on either side of said median axis, such that this part of the first connecting rod is driven either by the first end of the second connecting rod, or by the second end of the second connecting rod.

Fig. 1

Fig. 2

Fig. 3

Fig. 4

Fig. 5

Fig. 6

Fig. 7

Fig. 8

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3204690 A